# EUROPEAN PATENT APPLICATION

(11) **EP 4 773 327 A1**
(43) Date of publication of application: **08.07.2026**
(21) Application number: 25864614.0
(22) Date of filing: 02.10.2025
(51) Int. Cl.: H01M 10/0587, H01M 50/531, H01M 10/052

(54) **ELECTRODE ASSEMBLY AND SECONDARY BATTERY COMPRISING SAME**

(30) Priority: 08.10.2024 KR 20240136653
(71) Applicant: LG Energy Solution, Ltd., Seoul 07335 (KR)
(72) Inventor: JEONG, Ji Woo, Yuseong-gu, Daejeon 34122 (KR)
(74) Representative: Goddar, Heinz J.
(86) International application number: PCT/KR2025/015849
(87) International publication number: WO 2026/079890

(57) **Abstract**

The present disclosure relates to an electrode assembly and a secondary battery including the same, and more specifically, to an electrode assembly and a secondary battery including the same that may enable good electrolyte impregnation near the center part of the electrode assembly where compressive stress is high, thereby suppressing lithium deposition and thus controlling a phenomenon where the swelling of the electrode assembly is accelerated, and furthermore, may ultimately suppress the risk of rupture and abnormal heating behavior in the battery case.

## Description

### TECHNICAL FIELD

### CROSS-REFERENCE TO RELATED APPLICATIONS

The present application is based on and claims priority from Korean Patent Application No. 10-2024-0136653, filed on October 8, 2024, with the Korean Intellectual Property Office, the disclosure of which is incorporated herein in its entirety by reference.

### TECHNICAL FIELD

The present disclosure relates to an electrode assembly and a secondary battery including the same, and more specifically, to an electrode assembly and a secondary battery including the same that may enable good electrolyte impregnation near the center part of the electrode assembly where compressive stress is high, thereby suppressing lithium deposition and thus controlling a phenomenon where the swelling of the electrode assembly is accelerated, and furthermore, may ultimately suppress the risk of rupture and abnormal heating behavior in the battery case.

### BACKGROUND ART

Secondary batteries are classified into cylindrical and prismatic batteries in which the electrode assembly is embedded in a cylindrical or prismatic metal can, and pouch-type batteries in which the electrode assembly is embedded in a pouch-type case of an aluminum laminate sheet, depending on the shape of the battery case.

Additionally, the electrode assembly embedded in the battery case is a power generation element that can be charged and discharged having a stacked structure of positive electrode/separator/negative electrode, and may be classified into a jelly roll-type electrode assembly wound with a separator interposed between the long sheet-like positive electrode and negative electrode coated with an active material, a stacked electrode assembly in which multiple positive electrodes and negative electrodes cut into units of a predetermined size are sequentially stacked with a separator interposed therebetween, and a stacked/folded electrode assembly with a structure of winding bi-cells or full cells in which a predetermined unit of positive electrodes and negative electrodes are stacked with a separator interposed therebetween.

Among these, the jelly roll-type electrode assembly is widely manufactured because it has the advantages of easy manufacturing and high energy density per weigh. The jelly roll-type electrode assembly may be manufactured by assembling a laminate composed of long sheet-like positive electrode and negative electrode with a separator interposed therebetween, and then winding the laminate along the length direction of the sheet while contacting a core at one end part of the electrode laminate. And, this jelly roll-type electrode assembly may be inserted into a battery case made of a cylindrical metal can to form a cylindrical secondary battery.

Conventionally, due to the presence of an outer rigid battery case (typically made of a can) in the cylindrical secondary battery, compressive stress occurred near the center part (core part) where an empty space exists to relieve the stress caused by expansion of the jelly roll-type electrode assembly during charging. In this stress concentration region, the electrolyte becomes locally insufficient, which leads to an increase in resistance and thus, causes lithium (Li) deposition.

When lithium deposition occurs, the electrode thickness increases, thereby further increasing the compressive stress, and by strongly pressing the porous separator, the lithium deposition area gradually increases from the center part (core part) to the outer part, in which case, abnormal heating behavior may be exhibited, and the risk of ignition further increases. The holes of the separator are blocked by the compressive stress, and the electrode byproduct layer causes a rapid increase in resistance and heat generation. Due to this continuous side reaction and lithium deposition, the jelly roll-type electrode assembly expands, which may cause the rupture and explosion of the battery case. Therefore, there has been a need for research to solve this problem.

### DISCLOSURE

### TECHNICAL PROBLEM

The present disclosure is designed to solve the problems of the related art, and therefore the present disclosure is directed to providing an electrode assembly and a secondary battery including the same that may enable good electrolyte impregnation near the center part of the electrode assembly where compressive stress is high, thereby suppressing lithium deposition and thus controlling a phenomenon where the swelling of the electrode assembly is accelerated, and furthermore, may ultimately suppress the risk of rupture and abnormal heating behavior in the battery case.

### TECHNICAL SOLUTION

An electrode assembly according to the present disclosure is an electrode assembly in which a first electrode, a separator, and a second electrode are alternately stacked and wound to form a winding center part, wherein the first electrode includes an electrode current collector; and an electrode active material layer formed on at least one surface of the electrode current collector, wherein the electrode active material layer includes a first active material layer having a pattern shape on an outer surface thereof; and a second active material layer formed on a region of the electrode current collector where the first active material layer is not formed, and wherein the first active material layer is formed closer to the winding center part than the second active material layer.

The second active material layer may be positioned closer to a winding end part side than the first active material layer.

The pattern shape may include a groove shape recessed inward.

The pattern shape may be provided in any one form of a dot, line, and grid when viewed in a plan view.

The groove shape included in the pattern shape may be provided in a plurality of columns and a plurality of rows.

The second active material layer may be formed to have a flat outer surface.

The first active material layer may be formed continuously from the winding center part to the boundary part between the first active material layer and the second active material layer.

The second active material layer may be formed continuously from the winding end part to the boundary part between the first active material layer and the second active material layer.

A first electrode tab may be attached to the winding end part of the electrode current collector of the first electrode.

The second electrode may have a second electrode tab attached to the winding center part, and the first active material layer may be positioned at a part facing the second electrode tab.

The first electrode may be a negative electrode, and the second electrode may be a positive electrode.

A secondary battery according to the present disclosure includes an electrode assembly described above and a battery case in which the electrode assembly is accommodated therein.

### ADVANTAGEOUS EFFECTS

An electrode assembly and a secondary battery including the same according to the present disclosure may enable good electrolyte impregnation near the center part of the electrode assembly where compressive stress is high, thereby suppressing lithium deposition and thus controlling a phenomenon where the swelling of the electrode assembly is accelerated, and furthermore, may ultimately suppress the risk of rupture and abnormal heating behavior in the battery case.

### DESCRIPTION OF DRAWINGS

FIG. 1 is a longitudinal cross-sectional view illustrating a cylindrical secondary battery of the present disclosure.
FIG. 2 is a plan view illustrating a state when an electrode assembly according to Embodiment 1 of the present disclosure is laid out on a plane.
FIG. 3 is a side view illustrating a first electrode in the electrode assembly according to Embodiment 1 of the present disclosure.
FIG. 4 is a plan view illustrating a first active material layer of the first electrode illustrated in FIG. 3, viewed from above.
FIG. 5 is a cross-sectional view illustrating a state in which the first electrode is seen on a cross-sectional view taken along line A-A' of FIG. 1.
FIG. 6 is a plan view illustrating a state when an electrode assembly according to Embodiment 2 of the present disclosure is laid out on a plane.

### BEST MODE

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Embodiment 1

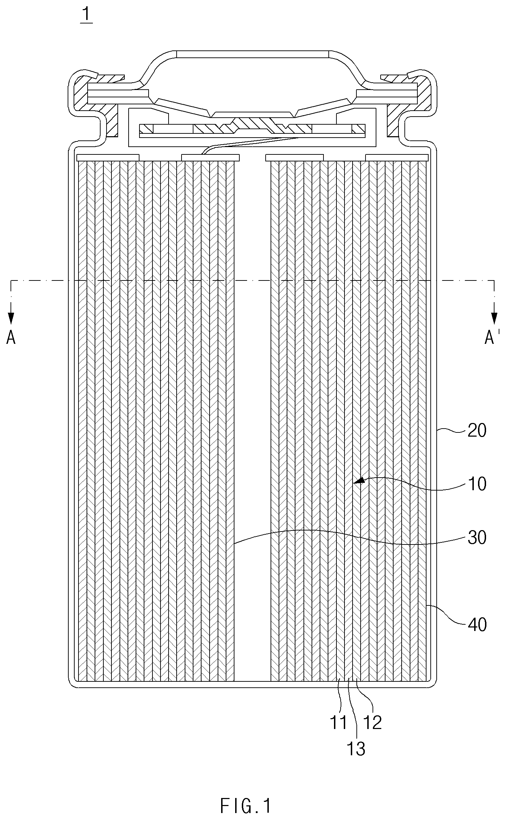

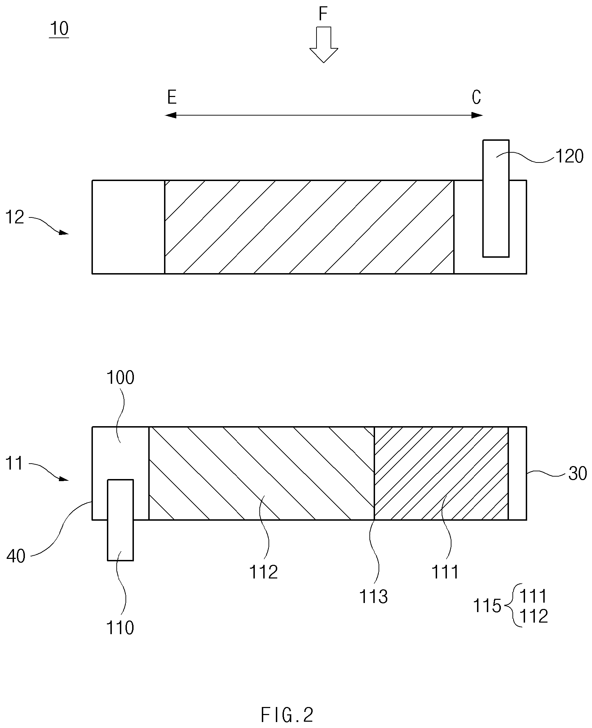

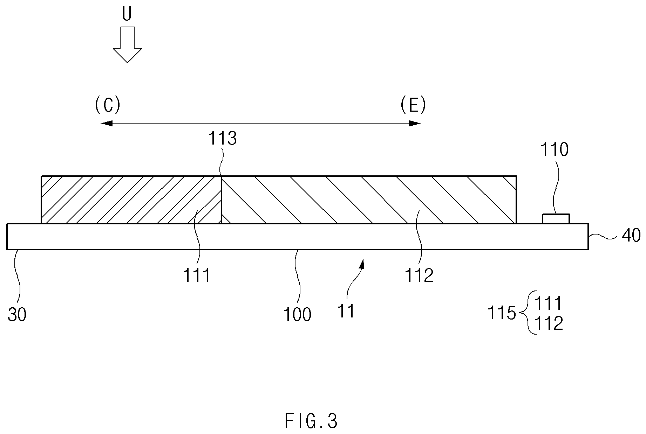

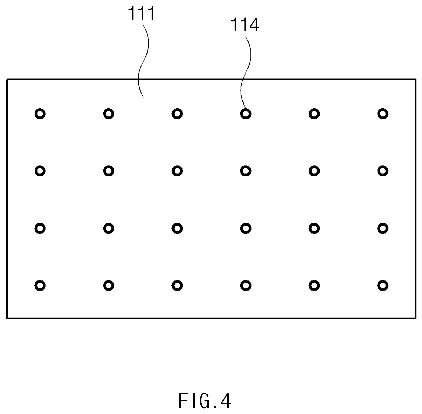

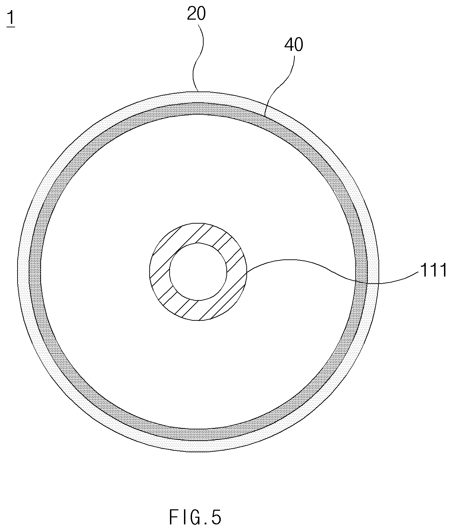

FIG. 1 is a longitudinal cross-sectional view illustrating a cylindrical secondary battery. FIG. 2 is a plan view illustrating a state when an electrode assembly according to Embodiment 1 of the present disclosure is laid out on a plane. FIG. 3 is a side view illustrating a first electrode in the electrode assembly according to Embodiment 1 of the present disclosure. FIG. 4 is a plan view illustrating a first active material layer of the first electrode illustrated in FIG. 3, viewed from above. FIG. 5 is a cross-sectional view illustrating a state in which the first electrode is seen on a cross-sectional view taken along line A-A' of FIG. 1.

Referring to FIG. 1, a cylindrical secondary battery 1 of the present disclosure is illustrated in FIG. 1. The cylindrical secondary battery 1 may include a jelly roll-type electrode assembly 10 formed by alternately stacking and winding a first electrode 11, a separator 13, and a second electrode 12 therein. This cylindrical secondary battery 1 may include a battery case 20 accommodating this electrode assembly 10 in an internal receiving space. The general internal structure of the cylindrical secondary battery 1 is illustrated in FIG. 1. The internal structure unrelated to the features of the present disclosure is the same as the internal structure of a conventional cylindrical battery known in the art, and thus, a description thereof will be omitted.

The electrode assembly 10 according to Embodiment 1 of the present disclosure may be an electrode assembly 10 included in the battery case 20 of the cylindrical battery described above. And, the electrode assembly 10 according to Embodiment 1 of the present disclosure relates to an electrode assembly 10 in which a first electrode 11, a separator 13, and a second electrode 12 are alternately stacked and wound to form a winding center part 30.

FIG. 2 illustrates the electrode assembly 10 according to Embodiment 1 of the present disclosure laid out on a plane. Here, for convenience of illustration, the separator 13 is omitted. FIG. 3 is a side view of only the first electrode 11 of FIG. 2, viewed in the F direction.

Referring to FIGS. 2 and 3, the electrode assembly 10 according to Embodiment 1 of the present disclosure may include a first electrode 11 and a second electrode 12. Here, the first electrode 11 may be, for example, a negative electrode. The second electrode 12 may be a positive electrode, which has the opposite polarity of the first electrode 11. Here, the first electrode 11 may include an electrode current collector 100 and an electrode active material layer 115. The electrode current collector 100 may be configured in the form of a metal foil. The electrode active material layer 115 may include an active material, a conductive material, and a binder. And, the electrode active material layer 115 may be formed on at least one surface of the electrode current collector 100.

In the electrode assembly 10 according to Embodiment 1 of the present disclosure, this electrode active material layer 115 may not have a uniform configuration. That is, the electrode active material layer 115 may include a first active material layer 111 and a second active material layer 112 that are coated on the surface of the electrode current collector 100 along the length direction of the first electrode 11. The first active material layer 111 is formed (coated), and the active material layer formed on the region of the electrode current collector 100 where the first active material layer 111 is not formed may be the second active material layer 112. A part forming the boundary between the first active material layer 111 and the second active material layer 112 may be a boundary part 113.

The first active material layer 111 may be an active material layer having a pattern shape 114 on an outer surface thereof (see FIG. 4). Here, the pattern shape 114 may include a groove shape recessed inward. And, the second active material layer 112 may be an active material layer having a flat outer surface without a pattern.

FIG. 4 is a plan view of the first active material layer 111 of the first electrode 11 illustrated in FIG. 3, viewed down from the U direction. Referring to FIG. 4, the pattern shape 114 of the first active material layer 111 may be provided, for example, in the form of a dot when viewed in a plan view. The groove shape in the form of a dot may be provided in a plurality of columns and a plurality of rows, and may be arranged at equal predetermined intervals between them.

While FIG. 4 illustrates an example of a dot shape as seen in the plan view, it is obvious that a line shape or a grid shape may be formed. The line shape or the grid shape may increase the surface area or relatively increase the porosity.

When the groove with an inwardly recessed shape is provided in the first active material layer 111, the surface area of the outer surface of the first active material layer 111 may be larger than that of the second active material layer 112 without the pattern shape 114. Additionally, since the recessed groove shape is formed, the porosity of the first active material layer 111 may be greater than that of the second active material layer 112. Therefore, the electrolyte impregnation property may increase in the part where the first active material layer 111 is present. The amount of the electrolyte may be greater in that part.

Here, in the electrode assembly 10 according to Embodiment 1 of the present disclosure, the first active material layer 111 is formed closer to the winding center part 30 than the second active material layer 112 (here, the winding center part 30 may mean the end part of the winding center part side (direction) C). In this case, the second active material layer 112 may be positioned closer to the winding end part 40 than the first active material layer 111 (here, the winding end part 40 may mean the end part of the winding end part 40 side (direction) E).

Conventionally, due to the presence of an outer rigid battery case 20 (typically formed as a can) in the cylindrical secondary battery 1, compressive stress occurred near the center part (core part) where an empty space exists to relieve the stress caused by expansion of the jelly roll-type electrode assembly 10 during charging. In this stress concentration region, the electrolyte becomes locally insufficient, which leads to an increase in resistance and thus, causes lithium (Li) deposition.

When lithium deposition occurs, the electrode thickness increases, thereby further increasing the compressive stress, and by strongly pressing the porous separator 13, the lithium deposition area gradually increases from the center part (core part) to the outer part, in which case, abnormal heating behavior may be exhibited, and the risk of ignition further increases. The holes of the separator 13 are blocked by the compressive stress, and the electrode byproduct layer causes a rapid increase in resistance and heat generation. Due to this continuous side reaction and lithium deposition, the jelly roll-type electrode assembly 10 expands, which may cause the rupture and explosion of the battery case 20.

However, the electrode assembly 10 according to Embodiment 1 of the present disclosure has the configuration described above, thereby enabling good electrolyte impregnation near the center part of the electrode assembly 10 where the compressive stress is high. This is because the first active material layer 111 having high electrolyte impregnation and being capable of holding more electrolyte may be positioned near the center of the electrode assembly.

FIG. 5 is a cross-sectional view illustrating a state in which the first electrode 11 is seen on a cross-sectional view taken along line A-A' of FIG. 1. Referring to this, it may be seen that the first active material layer 111 is positioned near the center part of the electrode assembly 10 where the compressive stress is high.

The present disclosure may enhance electrolyte impregnation properties in areas with high compressive stress, thereby suppressing lithium deposition and thus controlling a phenomenon where the swelling of the electrode assembly 10 is accelerated. Furthermore, the risk of rupture and abnormal heating behavior in the battery case 20 may be ultimately suppressed.

Meanwhile, referring to FIGS. 2 and 3, the first active material layer 111 may be formed continuously from the winding center part 30 to the boundary part 113 between the first active material layer 111 and the second active material layer 112. And, the second active material layer 112 may be formed continuously from the winding end part 40 to the boundary part 113 between the first active material layer 111 and the second active material layer 112. When it is formed densely and without gaps in this way, the electric energy density may be further increased.

Meanwhile, referring to FIG. 2, in the electrode assembly 10 according to Embodiment 1 of the present disclosure, a first electrode tab 110 may be attached to the winding end part 40 of the electrode current collector 100 of the first electrode 11. And, the second electrode 12 may have a second electrode tab 120 attached to the winding center part 30. And, the first active material layer 111 may be positioned at a part facing the second electrode tab 120. Since the part where the second electrode tab 120 is positioned will be subjected to greater compressive stress due to the thickness of the second electrode tab 120, further improved effects may be achieved if the first active material layer 111 covers this part.

Meanwhile, the secondary battery 1 according to the present disclosure may be configured to include the electrode assembly 10 according to Embodiment 1 of the present disclosure and the battery case 20 accommodating the electrode assembly 10 therein. This secondary battery 1 may exhibit the same effects as those exhibited in the electrode assembly 10 according to Embodiment 1 of the present disclosure described above.

### Embodiment 2

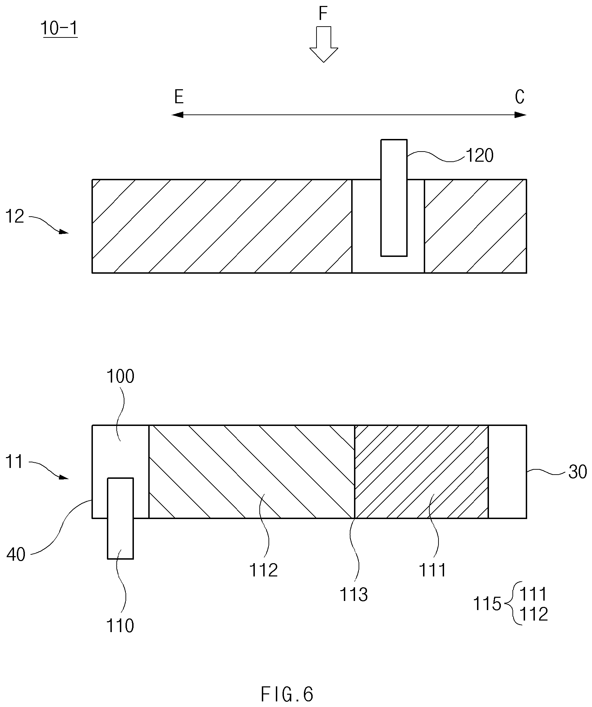

FIG. 6 is a plan view illustrating a state when an electrode assembly 10 according to Embodiment 2 of the present disclosure is laid out on a plane.

Embodiment 2 of the present disclosure differs from Embodiment 1 in that the position of the second electrode tab 120 is different compared to the electrode assembly 10 according to Embodiment 1 of the present disclosure.

Contents common to Embodiment 1 will be omitted as much as possible, and Embodiment 2 will be described. That is, it is obvious that contents not described in Embodiment 2 may be regarded as contents of Embodiment 1 if necessary.

Referring to FIG. 6, the electrode assembly 10-1 according to Embodiment 2 of the present disclosure may have a different shape of the second electrode 12 compared to Embodiment 1. In particular, the position of the second electrode tab 120 may be different.

In the second electrode 12, the second electrode tab 120 may be attached to a position between the winding center part and the winding end part. And, the position of the first electrode tab 110 may be the same as in Embodiment 1. That is, the first electrode tab 110 may be attached to the winding end part 40 of the electrode current collector 100 of the first electrode 11.

And, in the electrode assembly 10-1 according to Embodiment 2 of the present disclosure, the first active material layer 111 may be positioned at a part facing the second electrode tab 120. Here, the second electrode tab 120 is not positioned at the winding center part 30 side, but the position where the second electrode tab 120 is positioned is a place where compressive stress may occur due to the thickness of the second electrode tab 120. Therefore, if the first active material layer 111 covers this part, the electrolyte impregnation property may be increased at a place where the compressive stress is high, and accordingly, the effect of suppressing the occurrence of lithium deposition may be obtained, thereby greatly contributing to improved battery safety.

The present disclosure has been hereinabove described with regard to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [List of Reference Numerals]

1: Secondary battery
10: Electrode assembly
11: First electrode
12: Second electrode
13: Separator
20: Battery case
30: Winding center part
40: Winding end part
100: Electrode current collector
110: First electrode tab
111: First active material layer
112: Second active material layer
113: Boundary part
114: Pattern shape
115: Electrode active material layer
120: Second electrode tab
C: Winding center part side
E: Winding end part side

## Claims

1. An electrode assembly in which a first electrode, a separator, and a second electrode are alternately stacked and wound to form a winding center part,
wherein the first electrode comprises:
an electrode current collector; and
an electrode active material layer formed on at least one surface of the electrode current collector,
wherein the electrode active material layer comprises:
a first active material layer having a pattern shape on an outer surface thereof; and
a second active material layer formed on a region of the electrode current collector where the first active material layer is not formed, and
wherein the first active material layer is formed closer to the winding center part than the second active material layer.

2. The electrode assembly according to claim 1,
wherein the second active material layer is positioned closer to a winding end part side than the first active material layer.

3. The electrode assembly according to claim 1,
wherein the pattern shape comprises a groove shape recessed inward.

4. The electrode assembly according to claim 3,
wherein the pattern shape is provided in any one form of a dot, line, and grid when viewed in a plan view.

5. The electrode assembly according to claim 3,
wherein the groove shape included in the pattern shape is provided in a plurality of columns and a plurality of rows.

6. The electrode assembly according to claim 1,
wherein the second active material layer is formed to have a flat outer surface.

7. The electrode assembly according to claim 1,
wherein the first active material layer is formed continuously from the winding center part to the boundary part between the first active material layer and the second active material layer.

8. The electrode assembly according to claim 1,
wherein the second active material layer is formed continuously from the winding end part to the boundary part between the first active material layer and the second active material layer.

9. The electrode assembly according to claim 1,
wherein a first electrode tab is attached to the winding end part of the electrode current collector of the first electrode.

10. The electrode assembly according to claim 1,
wherein the second electrode has a second electrode tab attached to the winding center part, and
wherein the first active material layer is positioned at a part facing the second electrode tab.

11. The electrode assembly according to claim 1,
wherein the second electrode has a second electrode tab attached to a position between the winding center part and the winding end part, and
wherein the first active material layer is positioned at a part facing the second electrode tab.

12. The electrode assembly according to claim 1,
wherein the first electrode is a negative electrode, and the second electrode is a positive electrode.

13. A secondary battery comprising an electrode assembly according to claim 1; and a battery case in which the electrode assembly is accommodated therein.
